# EUROPEAN PATENT APPLICATION

(11) **EP 4 383 594 A1**
(43) Date of publication of application: **12.06.2024**
(21) Application number: 22852552.3
(22) Date of filing: 03.03.2022
(51) Int. Cl.: H04H 20/02, H04N 21/235, H04N 21/2362

(54) **RETRANSMITTING DEVICE, RETRANSMITTING METHOD, RECEIVING DEVICE, AND RECEIVING METHOD**

(30) Priority: 06.08.2021 JP 2021129588
(71) Applicant: Sony Group Corporation, Tokyo 108-0075 (JP)
(72) Inventor: TAKAHASHI Kazuyuki, Tokyo 108-0075 (JP)
(74) Representative: 2SPL Patentanwälte PartG mbB
(86) International application number: PCT/JP2022/009031
(87) International publication number: WO 2023/013123

(57) **Abstract**

The present disclosure relates to a retransmission device, a retransmission method, a reception device, and a reception method that enable more appropriate processing of control information.

Provided is a retransmission device that includes: a reception unit that receives a broadcast signal of a first broadcasting system; a conversion unit that converts first control information transmitted in a physical layer defined by the first broadcasting system into second control information to be transmitted in an upper layer, the upper layer being a layer higher than a physical layer defined by a second broadcasting system different from the first broadcasting system; and a transmission unit that transmits a broadcast signal of the second broadcasting system. The present disclosure can be applied to, for example, a retransmission device that retransmits digital terrestrial television broadcasting.

## Description

### TECHNICAL FIELD

The present disclosure relates to a retransmission device, a retransmission method, a reception device, and a reception method, and more particularly, to a retransmission device, a retransmission method, a reception device, and a reception method that enable more appropriately processing control information.

### BACKGROUND ART

An operation of retransmitting digital terrestrial television broadcasting is performed. For retransmission of digital terrestrial television broadcasting, digital cable television broadcasting or the like is used (refer to, for example, Patent Document 1).

### CITATION LIST

### PATENT DOCUMENT

Patent Document 1: Japanese Patent Application Laid-Open No. 2010-220241

### SUMMARY OF THE INVENTION

### PROBLEMS TO BE SOLVED BY THE INVENTION

In digital terrestrial television broadcasting, it is possible to transmit control information by a physical layer, but in a case where retransmission by a transmodulation system is performed, the control information transmitted by the physical layer cannot be appropriately processed. Furthermore, there is also a request for processing the control information transmitted in the physical layer on the reception device side, and a proposal for appropriately processing the control information has been demanded.

The present disclosure has been made in view of such circumstances, and makes it possible to more appropriately process control information.

### SOLUTIONS TO PROBLEMS

A retransmission device according to one aspect of the present disclosure includes: a reception unit that receives a broadcast signal of a first broadcasting system; a conversion unit that converts first control information transmitted in a physical layer defined by the first broadcasting system into second control information to be transmitted in an upper layer, the upper layer being a layer higher than a physical layer defined by a second broadcasting system different from the first broadcasting system; and a transmission unit that transmits a broadcast signal of the second broadcasting system.

A retransmission method according to one aspect of the present disclosure is a retransmission method, including: by a retransmission device, receiving a broadcast signal of a first broadcasting system; converting first control information transmitted in a physical layer defined by the first broadcasting system into second control information to be transmitted in an upper layer, the upper layer being a layer higher than a physical layer defined by a second broadcasting system different from the first broadcasting system; and transmitting a broadcast signal of the second broadcasting system.

In the retransmission device and the retransmission method according to one aspect of the present disclosure, a broadcast signal of a first broadcasting system is received, first control information transmitted in a physical layer defined by the first broadcasting system is converted into second control information to be transmitted in an upper layer, the upper layer being a layer higher than a physical layer defined by a second broadcasting system different from the first broadcasting system, and a broadcast signal of the second broadcasting system is transmitted.

A reception device according to one aspect of the present disclosure includes: a reception unit that receives and demodulates a broadcast signal of a first broadcasting system; a processing unit that processes a packet obtained by demodulating the broadcast signal, in which the reception unit includes a conversion unit that converts first control information transmitted in a physical layer defined by the first broadcasting system into second control information to be transmitted in an upper layer, the upper layer being a layer higher than a physical layer defined by a second broadcasting system different from the first broadcasting system, and the processing unit processes a packet storing the second control information output from the reception unit.

A reception method according to one aspect of the present disclosure is a reception method in a reception device including: a reception unit that receives and demodulates a broadcast signal of a first broadcasting system; and a processing unit that processes a packet obtained by demodulating the broadcast signal, in which the reception unit converts first control information transmitted in a physical layer defined by the first broadcasting system into second control information to be transmitted in an upper layer, the upper layer being a layer higher than a physical layer defined by a second broadcasting system different from the first broadcasting system, and the processing unit processes a packet storing the second control information output from the reception unit.

In the reception device and the reception method according to one aspect of the present disclosure, the broadcast signal of the first broadcasting system is received and demodulated, and the packet obtained by demodulating the broadcast signal is processed. Furthermore, the first control information transmitted in the physical layer defined by the first broadcasting system is converted into second control information to be transmitted in an upper layer, the upper layer being a layer higher than the physical layer defined by the second broadcasting system different from the first broadcasting system, and the packet storing the second control information is processed.

Note that the retransmission device and the reception device according to one aspect of the present disclosure may be independent devices or may be internal blocks constituting one device.

### BRIEF DESCRIPTION OF DRAWINGS

Fig. 1 is a block diagram illustrating a configuration example of an embodiment of a transmission system to which the present disclosure is applied.
Fig. 2 is a block diagram illustrating a configuration example of a transmission device in Fig. 1.
Fig. 3 is a block diagram illustrating a configuration example of a retransmission device in Fig. 1.
Fig. 4 is a block diagram illustrating a configuration example of a reception device in Fig. 1.
Fig. 5 is a diagram illustrating an example of a protocol stack of digital terrestrial television broadcasting.
Fig. 6 is a diagram illustrating an example of syntax of a TLV packet.
Fig. 7 is a diagram illustrating an example of assignment of packet type.
Fig. 8 is a diagram illustrating an example of syntax of TLV-SI.
Fig. 9 is a diagram illustrating an example of assignment of table identification of TLV-SI.
Fig. 10 is a diagram illustrating an example of a protocol stack at the time of retransmission by digital cable television broadcasting.
Fig. 11 is a diagram illustrating an example of arrangement of a new control information descriptor.
Fig. 12 is a diagram illustrating a first example of syntax of a control information descriptor defined by extending MMT-SI.
Fig. 13 is a diagram illustrating a second example of syntax of a control information descriptor defined by extending MMT-SI.
Fig. 14 is a diagram illustrating an example of a protocol stack in an MPEG-2 system.
Fig. 15 is a diagram illustrating an example of arrangement of descriptors in the MPEG-2 system.
Fig. 16 is a diagram illustrating an example of a protocol stack in ATSC 3.0.
Fig. 17 is a diagram illustrating an example of arrangement of tables in ATSC 3.0.
Fig. 18 is a flowchart illustrating a flow of processing of each device in the transmission system in Fig. 1.
Fig. 19 is a block diagram illustrating another configuration example of the embodiment of the transmission system to which the present disclosure is applied.
Fig. 20 is a block diagram illustrating a configuration example of a reception device in Fig. 19.
Fig. 21 is a flowchart illustrating a flow of processing of each device in the transmission system in Fig. 19.
Fig. 22 is a block diagram illustrating a configuration example of a computer.

### MODE FOR CARRYING OUT THE INVENTION

### <1. First Embodiment>

### (Configuration of Transmission System)

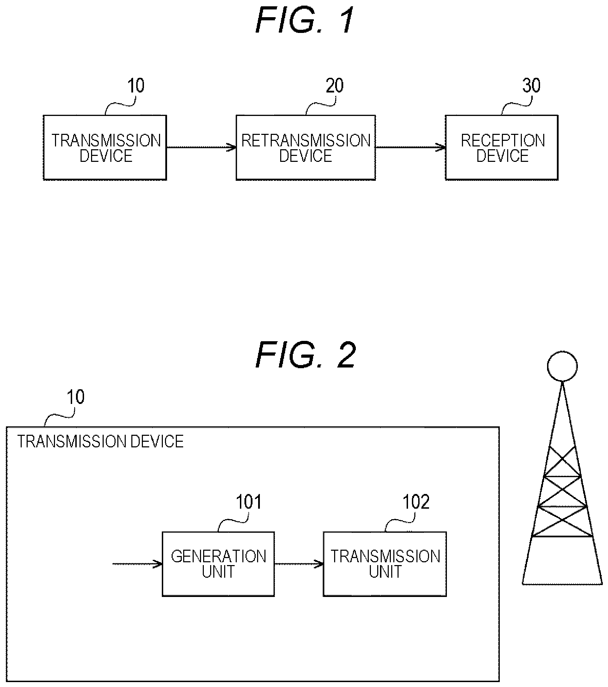

Fig. 1 is a block diagram illustrating a configuration example of an embodiment of a transmission system to which the present disclosure is applied.

In Fig. 1, the transmission system includes a transmission device 10, a retransmission device 20, and a reception device 30.

The transmission device 10 is a device that transmits content such as a broadcast program produced by a broadcast station of terrestrial broadcasting. The transmission device 10 generates a broadcast stream, performs necessary processing on the stream, and transmits the resulting broadcast signal of digital terrestrial television broadcasting from a transmission antenna installed in a transmission station.

The retransmission device 20 is a head end device installed in a cable television station or the like. The retransmission device 20 performs necessary processing on a broadcast signal of digital terrestrial television broadcasting received via the antenna, and transmits the resulting broadcast signal of digital cable television broadcasting to a cable television transmission network.

The reception device 30 is a fixed receiver such as a television receiver, a set top box (STB), a recorder, a game machine, or a network storage. The reception device 30 is connected to the cable television transmission network by a cable such as an optical fiber cable or a coaxial cable.

The reception device 30 receives the broadcast signal of digital cable television broadcasting transmitted from the retransmission device 20 via the cable television transmission network. The reception device 30 outputs video and audio of content such as a broadcast program by processing a broadcast stream obtained from the broadcast signal. As a result, the user can view content such as a broadcast program.

In the following description, the broadcast signal of digital terrestrial television broadcasting is also referred to as a terrestrial broadcast signal. Furthermore, the broadcast signal of digital cable television broadcasting is also referred to as a cable broadcast signal.

### (Configuration of Transmission Device)

Fig. 2 is a block diagram illustrating a configuration example of the transmission device 10 in Fig. 1.

In Fig. 2, the transmission device 10 includes a generation unit 101 and a transmission unit 102.

The generation unit 101 generates, on the basis of the data input thereto, a broadcast stream to be supplied to the transmission unit 102.

The broadcast stream includes a broadcast component constituting content such as a broadcast program and a CM produced by a broadcast station of terrestrial broadcasting, and control information regarding the broadcast component. The broadcast component includes components such as a video stream, an audio stream, and a subtitle stream.

The transmission unit 102 generates a physical layer frame conforming to the broadcasting system of digital terrestrial television broadcasting on the basis of the broadcast stream supplied from the generation unit 101. The transmission unit 102 performs necessary processing such as modulation processing on the physical layer frame to be transmitted as a terrestrial broadcast signal. The terrestrial broadcast signal is transmitted from a transmission antenna installed in a transmission station.

The physical layer frame includes control information such as transmission multiplexing control information. In the following description, the control information transmitted in the physical layer is also referred to as physical layer control information. Furthermore, control information transmitted in an upper layer (for example, a transport layer) that is a layer higher than the physical layer is also referred to as upper layer control information. For example, the control information regarding the broadcast component is included in the upper layer control information.

### (Configuration of Retransmission Device)

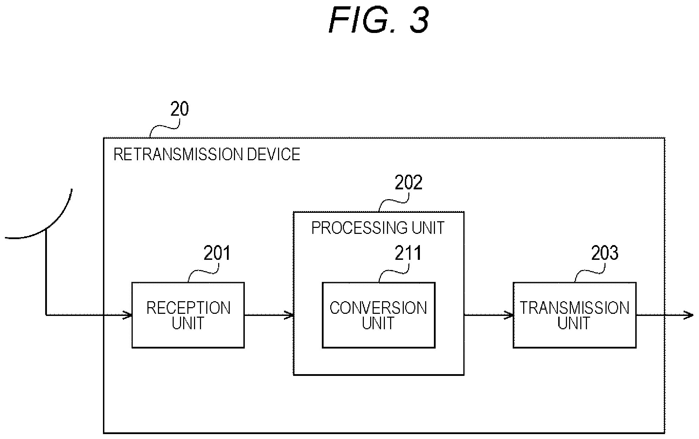

Fig. 3 is a block diagram illustrating a configuration example of a retransmission device 20 in Fig. 1.

In Fig. 3, the retransmission device 20 includes a reception unit 201, a processing unit 202, and a transmission unit 203.

The reception unit 201 receives the terrestrial broadcast signal transmitted from the transmission device 10 via the antenna, performs necessary processing to be supplied to the processing unit 202.

The processing unit 202 performs processing corresponding to the transmodulation system on the signal supplied from the reception unit 201, and supplies the resulting signal to the transmission unit 203. The transmodulation system is a system in which the retransmission device 20 of the cable television station changes the modulation scheme of the received broadcast signal and retransmits the broadcast signal.

The processing unit 202 includes a conversion unit 211. The conversion unit 211 converts the physical layer control information transmitted in the physical layer defined by the broadcasting system of digital terrestrial television broadcasting into upper layer control information to be transmitted in the upper layer defined by the broadcasting system of digital cable television broadcasting.

The transmission unit 203 transmits a cable broadcast signal on the basis of the signal supplied from the processing unit 202. The cable broadcast signal is transmitted via the cable television transmission network.

### (Configuration of Reception Device)

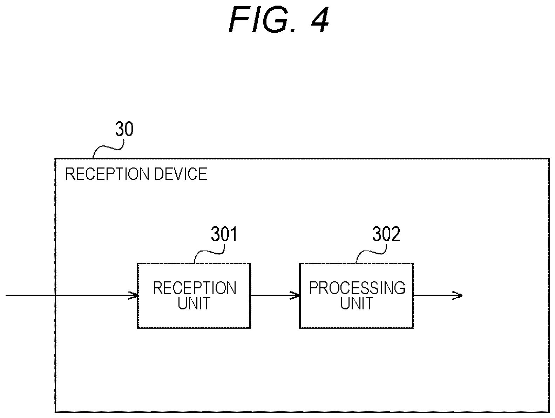

Fig. 4 is a block diagram illustrating a configuration example of the reception device 30 in Fig. 1.

In Fig. 4, the reception device 30 includes a reception unit 301 and a processing unit 302.

The reception unit 301 includes a tuner, a demodulation large scale integration (LSI), or the like. The reception unit 301 performs necessary processing such as demodulation processing on the cable broadcast signal received via the cable television transmission network, and supplies a packet storing data of the resulting broadcast stream to the processing unit 302.

The processing unit 302 includes a main system on chip (SoC) or the like. The processing unit 302 performs necessary processing such as decoding processing and reproduction processing on the packet supplied from the reception unit 301.

The broadcast stream includes a broadcast component and upper layer control information. The upper layer control information includes control information regarding the broadcast component and control information obtained by converting physical layer control information transmitted in the physical layer defined by a broadcasting system of digital terrestrial television broadcasting. For example, in the decoding processing and the reproduction processing, the data of the broadcast component is decoded and reproduced on the basis of the upper layer control information.

Data such as video and audio obtained by processing such as the decoding processing and the reproduction processing is output to a subsequent circuit. As a result, in the reception device 30, the video of content such as a broadcast program is displayed on a display, and the audio synchronized with the video is output from a speaker.

In the transmission system of Fig. 1 configured as described above, the broadcast stream generated by the transmission device 10 is retransmitted by the retransmission device 20, and is received and processed by the reception device 30 via the cable television transmission network, whereby content such as a broadcast program can be viewed.

Note that, in the configuration described above, the transmission device 10 includes the generation unit 101 and the transmission unit 102. However, the generation unit 101 and the transmission unit 102 may be provided in different devices. That is, the transmission system may be configured as a transmission system including a device including the generation unit 101 and a device including the transmission unit 102.

Furthermore, in the configuration described above, the retransmission device 20 includes the reception unit 201, the processing unit 202, and the transmission unit 203. However, the reception unit 201, the processing unit 202, and the transmission unit 203 may be provided in different devices. Moreover, in the configuration described above, the case where there is one reception device 30 is exemplified, but actually, a plurality of the reception devices 30 is provided, and each reception device 30 is connected to the cable television transmission network.

### (Details of Broadcasting System)

In Japan, integrated services digital broadcasting-terrestrial (ISDB-T) is adopted as a broadcasting system of digital terrestrial television broadcasting and a next-generation system of digital terrestrial television broadcasting is being studied. In the next-generation system digital terrestrial television broadcasting, control information is transmitted through a plurality of paths using transmission multiplexing configuration control (TMCC) or low latency channel (LLch) together with a broadcast stream.

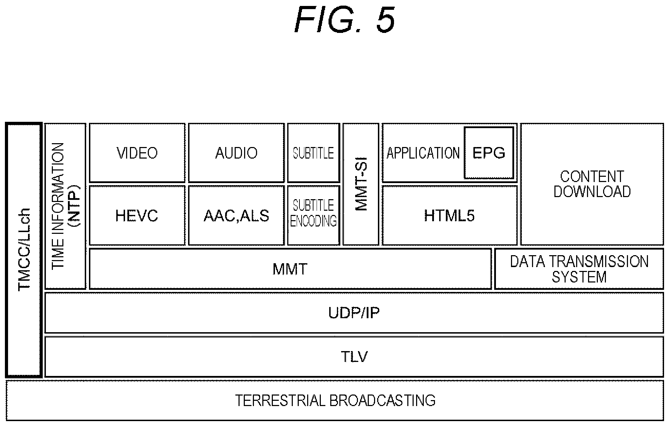

Fig. 5 is a diagram illustrating an example of a protocol stack of the next-generation system digital terrestrial television broadcasting. In the protocol stack in Fig. 5, the terrestrial broadcasting corresponding to the lowest layer corresponds to the physical layer, and the TMCC and the LLch are transmitted as the physical layer control information. The TMCC is transmission multiplexing control information. The LLch transmits additional information regarding broadcasting.

In the next-generation system digital terrestrial television broadcasting, an Internet protocol (IP) system is adopted, so that a type length value (TLV) packet for transmitting an IP/UDP packet through a broadcast transmission path is used. The IP/UDP packet is an IP packet including a user datagram protocol (UDP) packet. The TLV packet is a variable-length packet. In a case where the IP system is adopted, an MPEG media transport (MMT) scheme can be used as a media transport scheme (transport protocol).

The MMT scheme is a scheme for transmitting multimedia content using various networks such as broadcasting and communication. By using the MMT scheme, data such as video, audio, subtitles, control information, and applications is carried on an MMT protocol (MMTP) payload in a predetermined format, and is packetized into an MMTP packet to be stored in an IP/UDP packet. Then, the IP/UDP packet is stored in the TLV packet and encapsulated, and the resulting broadcast stream is transmitted as a terrestrial broadcast signal.

MMT-signaling Information (SI) is control information including the configuration of a broadcast program and the like. The MMT-SI is upper layer control information transmitted in the transport layer, which is an upper layer. Note that data such as time information and content can be stored and transmitted in the IP/UDP packet. The time information is information regarding time designated in a predetermined format such as a network time protocol (NTP) format. Note that the MMT scheme is defined, for example, in Document A below.

### Document A: ARIB STD-B60 Version 1.6 Association of Radio Industries and Businesses

Meanwhile, an operation of retransmitting content such as a broadcast program broadcasted by the next-generation system digital terrestrial television broadcasting by digital cable television broadcasting is assumed. In a case where the transmodulation system is adopted when the retransmission by digital cable television broadcasting is performed, it is necessary to change the modulation scheme used in digital terrestrial television broadcasting to the modulation scheme used in digital cable television broadcasting.

When such retransmission is performed, there is no path for transmitting the physical layer control information transmitted in the physical layer defined by the broadcasting system of digital terrestrial television broadcasting, and the control information cannot be appropriately transmitted. Since the broadcasting system of digital terrestrial television broadcasting and the broadcasting system of digital cable television broadcasting are standardized independently, there is no agreement of a system in which the broadcasting system of digital terrestrial television broadcasting and the broadcasting system of digital cable television broadcasting are matched with each other.

Therefore, in the transmission system in Fig. 1, in the retransmission device 20, the conversion unit 211 of the processing unit 202 converts the physical layer control information transmitted in the physical layer defined in the broadcasting system of digital terrestrial television broadcasting into upper layer control information to be transmitted in the upper layer defined in the broadcasting system of digital cable television broadcasting, so that the physical layer control information can be appropriately processed and transmitted. As a result, the reception device 30, which receives digital cable television broadcasting, can easily receive the upper layer control information obtained by converting the physical layer control information transmitted in the physical layer defined in the broadcasting system of digital terrestrial television broadcasting, and can perform processing based on the upper layer control information.

Hereinafter, details of the conversion processing performed by the conversion unit 211 of the processing unit 202 in the retransmission device 20 will be described. Here, five schemes of a first scheme to a fifth scheme will be exemplified as the conversion processing.

### (First Scheme)

In the first scheme, by assigning the control information to the packet type of the TLV packet, the physical layer control information from the transmission device 10 is converted into the upper layer control information by the retransmission device 20 and transmitted to the reception device 30.

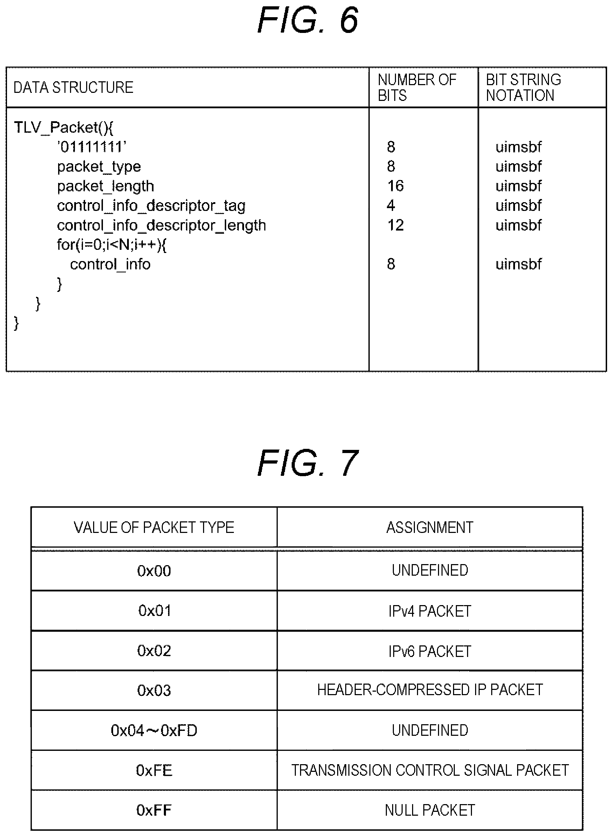

Fig. 6 is a diagram illustrating an example of syntax of a TLV packet.

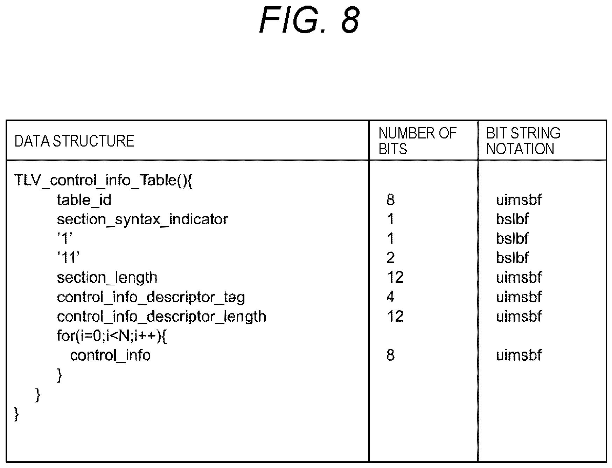

In Fig. 6, 8-bit packet_type and 8-bit packet_length are arranged in the TLV packet, following the fixed value '01111111'.

packet_type indicates a packet type for identifying a type of a packet to be stored in the TLV. packet_length indicates the length of subsequent data.

Fig. 7 is a diagram illustrating an example of assignment of the packet type. As illustrated in Fig. 7, in a case where an IPv4 packet and an IPv6 packet are stored, the values of the packet types are '0x01' and '0x02', respectively. Furthermore, in a case where a header-compressed IP packet, a transmission control signal packet, and a null packet are stored, the values of the packet types are '0x03', '0xFE', and '0xFF', respectively.

Although the values of '0x00' and '0x04' to '0xFD' are undefined, for example, the upper layer control information can be assigned to '0x04'. With this assignment, the upper layer control information can be encapsulated in the TLV packet identified by packet_type = '0x04'.

Returning to Fig. 6, in a case where packet_type = '0x04', 4-bit control_info_descriptor_tag and 12-bit control_info_descriptor_length are arranged.

control_info_descriptor_tag indicates a tag for identifying the type of the upper layer control information. control_info_descriptor_length indicates the data length of the subsequent upper layer control information.

8-bit control_info indicates that the upper layer control information is arranged. This upper layer control information is the same as or corresponding to the physical layer control information. The upper layer control information can be various control information used in processing in the reception device 30.

As described above, when the retransmission is performed by the broadcasting system adopting the IP system, the upper layer control information is assigned to the undefined area of the packet type in the TLV packet including the IP/UDP packet. With this assignment, the retransmission device 20 can transmit the upper layer control information converted from the physical layer control information by using the TLV packet.

### (Second Scheme)

In the second scheme, by extending TLV-signaling information (SI) and assigning control information to table identification, physical layer control information from the transmission device 10 is converted into upper layer control information by the retransmission device 20 and transmitted to the reception device 30. The TLV-SI is control information regarding multiplexing of IP packets. That is, in a case where the MMT scheme is used, two types of control information, which are the MMT-SI and the TLV-SI, are used.

Fig. 8 is a diagram illustrating an example of syntax of the TLV-SI.

In Fig. 8, in the TLV-SI, following 8-bit table_id and 1-bit section_syntax_indicator, fixed values of '1' and `11' are arranged.

table_id indicates the table identification for identifying a table. section_syntax_indicator indicates the value of the section syntax instruction.

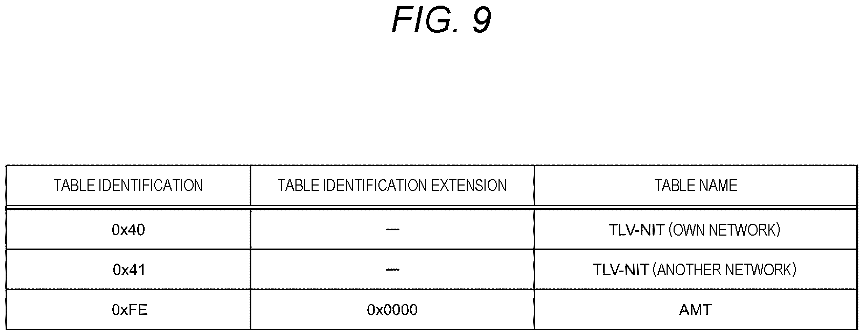

Fig. 9 is a diagram illustrating an example of assignment of the table identification of the TLV-SI. As illustrated in Fig. 9, in a case where TLV-NIT (own network) and TLV-NIT (another network) are arranged, the values of table identification are '0x40' and '0x41', respectively. The TLV-network information table (NIT) is a table including information that associates information on a transmission path such as a modulation frequency with a broadcast program in transmission using a TLV packet. Note that the TLV-NIT (own network) and the TLV-NIT (another network) are determined by notification.

Furthermore, as illustrated in Fig. 9, in a case where AMT is arranged, the value of the table identification is '0xFE'. The address map table (AMT) is a table including information for associating a service identification for identifying a broadcast program number with an IP packet.

In the table identification, although the values excluding '0x40', '0x41', and '0xFE' are undefined, the upper layer control information can be assigned to an undefined value such as '0xFD'. With this assignment, for example, the upper layer control information can be included in the TLV-SI including the table identified by table_id = '0xFD'.

Referring to Fig. 8, following the fixed values of '1' and `11', 12-bit section_length, 4-bit control_info_descriptor_tag, and 12-bit control_info_ descriptor_length are arranged.

section_length indicates the length of the section. control_info_descriptor_tag indicates a tag for identifying the type of the upper layer control information. control_info_descriptor_length indicates the data length of the subsequent upper layer control information.

8-bit control_info indicates that the upper layer control information is arranged. This upper layer control information is the same as or corresponding to the physical layer control information. The upper layer control information can be various control information used in processing in the reception device 30.

As described above, when the retransmission is performed by the broadcasting system adopting the IP system, the TLV-SI is extended, and the upper layer control information is assigned to the undefined area of the table identification. With this assignment, the retransmission device 20 can transmit the upper layer control information converted from the physical layer control information by using the TLV packet obtained by extending the TLV-SI.

### (Third Scheme)

In the third scheme, by extending the MMT-SI and defining a new control information descriptor, the physical layer control information from the transmission device 10 is converted into the upper layer control information by the retransmission device 20 and transmitted to the reception device 30.

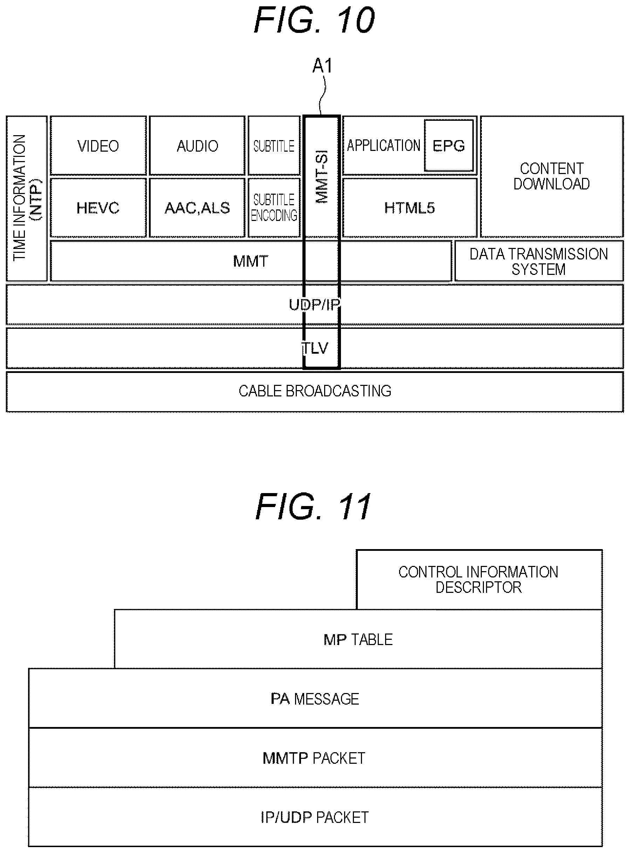

Fig. 10 is a diagram illustrating an example of a protocol stack at the time of retransmission by digital cable television broadcasting.

The protocol stack in Fig. 10 is different from the protocol stack in Fig. 5 in the following points. That is, in the protocol stack in Fig. 10, broadcasting corresponding to the physical layer represents digital cable television broadcasting (cable broadcasting) instead of digital terrestrial television broadcasting (terrestrial broadcasting). In a case where the transmodulation system is adopted when the retransmission by digital cable television broadcasting is performed, there is no appropriate path for transmitting the physical layer control information such as the TMCC and the LLch, and thus the physical layer control information is not illustrated.

In the protocol stack in Fig. 10, as indicated by the area surrounded by a frame A1, the MMT-SI is control information transmitted in the transport layer, which is an upper layer, and includes information such as the configuration of a broadcast program. The packets transmitted in the transport layer include an IP/UDP packet and a TLV packet. The protocol stack in Fig. 10 indicates that the physical layer control information is converted into the upper layer control information, and is encapsulated and transmitted by a new control information descriptor defined by extending the MMT-SI.

Fig. 11 is a diagram illustrating an example of arrangement of the new control information descriptor. As illustrated in Fig. 11, the new control information descriptor (Control_info_Descriptor) is defined in an MP table (MPT: MMT_Package_Table). The MP table provides information constituting a package such as an asset list and an asset position on a network. The asset corresponds to components such as video and audio constituting the package. PA message (PA_Message) is used to transmit various tables. The PA message includes the MP table, and is packetized into an MMTP packet to be stored in an IP/UDP packet.

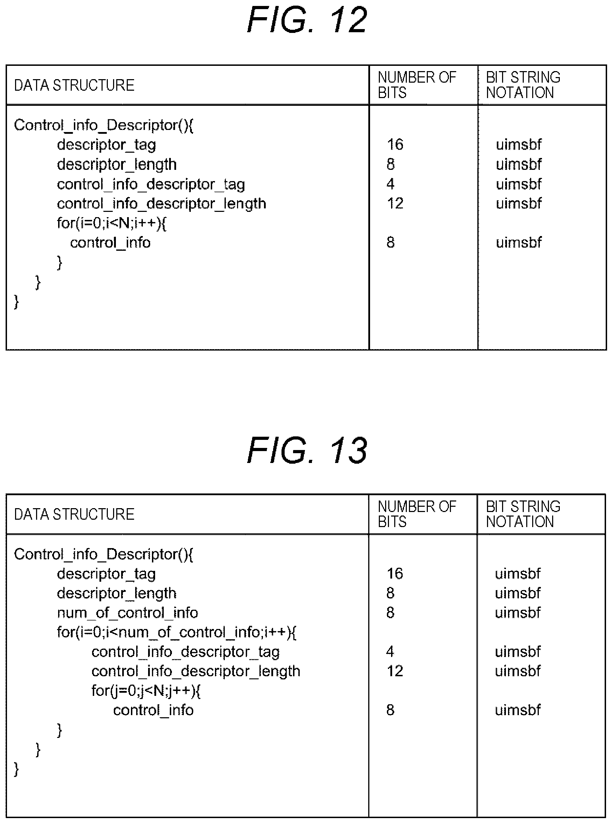

Fig. 12 is a diagram illustrating a first example of syntax of the control information descriptor defined by extending the MMT-SI. The syntax in Fig. 12 illustrates a case where single physical layer control information transmitted in the physical layer is transmitted in the transport layer as the upper layer control information by the MMT-SI.

16-bit descriptor_tag indicates a tag for identifying a type. 8-bit descriptor_length indicates the length of subsequent data.

4-bit control_info_descriptor_tag indicates a tag for identifying the type of the control information descriptor. 12-bit control_info_descriptor_length indicates the data length of the subsequent upper layer control information.

8-bit control_info indicates that the upper layer control information is arranged. This upper layer control information is the same as or corresponding to the physical layer control information. The upper layer control information can be various control information used in processing in the reception device 30.

Fig. 13 is a diagram illustrating a second example of syntax of the control information descriptor defined by extending the MMT-SI. The syntax in Fig. 13 illustrates a case where a plurality of pieces of physical layer control information transmitted in the physical layer is transmitted in the transport layer as the upper layer control information by the MMT-SI.

In the syntax in Fig. 13, descriptor_tag and descriptor_length are arranged similarly to the syntax in Fig. 12.

8-bit num_of_control_info indicates the number of pieces of upper layer control information to be arranged. 4-bit control_info_descriptor_tag indicates a tag for identifying the type of the control information descriptor. 12-bit control_info_descriptor_length indicates the data length of the subsequent upper layer control information.

8-bit control_info indicates that the upper layer control information is arranged. This upper layer control information is the same as or corresponding to the physical layer control information. The upper layer control information can be various control information used in processing in the reception device 30, and the number of pieces of control information indicated by num_of_control_info can be arranged.

As described above, when the retransmission is performed by the broadcasting system adopting the IP system and the MMT scheme as the media transport scheme, a new descriptor for transmitting any information is defined by extending the MMT-SI, and the upper layer control information is encapsulated by this descriptor. With this assignment, the retransmission device 20 can transmit the upper layer control information converted from the physical layer control information by using the TLV packet.

### (Fourth Scheme)

In the first scheme to the third scheme described above, when the operation of retransmitting the broadcast program broadcasted by the next-generation system digital terrestrial television broadcasting by digital cable television broadcasting is performed, the configuration in which the TLV packet is used as the transmission packet or the MMT scheme is used as the media transport scheme is described.

On the other hand, in the fourth scheme, when the operation of retransmission is performed, a configuration using an MPEG-2 system will be described in a case where the operation corresponding to a broadcasting system such as digital video broadcasting-cable (DVB-C), DVB-C2 (J.382 system), or ISDB-T is performed.

In the fourth scheme, when the operation of retransmission adopting the MPEG-2 system is performed, a new control information descriptor is defined, so that the physical layer control information from the transmission device 10 is converted into the upper layer control information by the retransmission device 20 to be transmitted to the reception device 30.

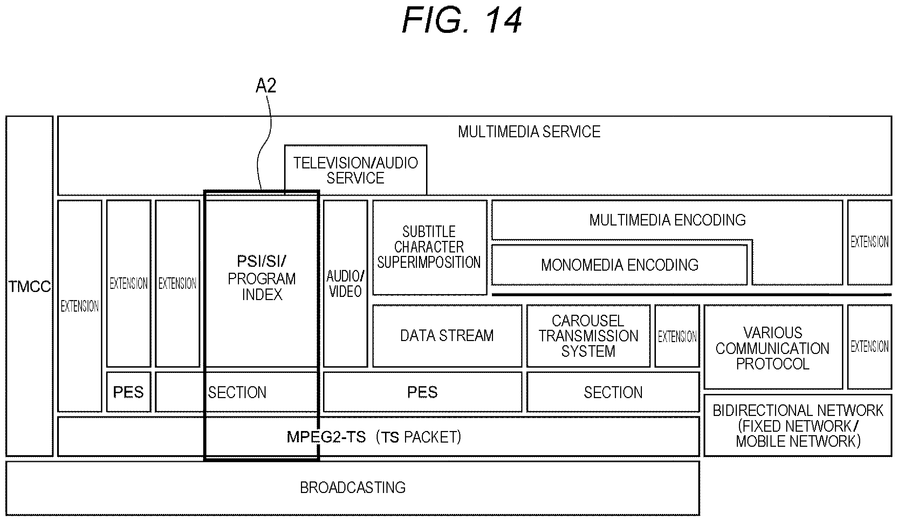

Fig. 14 is a diagram illustrating an example of a protocol stack in the MPEG-2 system. In the protocol stack in Fig. 14, broadcasting corresponds to the physical layer, and the TMCC is transmitted as physical layer control information. In a broadcasting system corresponding to the MPEG-2 system, an MPEG2-transport stream (TS) system is adopted, so that a TS packet is used. The TS packet is a fixed-length packet.

Data such as video, audio, and subtitles is packetized into a packetized elementary stream (PES) format to be stored in a TS packet. Control information such as program specific information/service information (PSI/SI) and data of a carousel transmission system are stored in a TS packet in a section format. In the protocol stack in Fig. 14, as indicated by the area surrounded by a frame A2, control information such as PSI/SI is transmitted in the transport layer, which is an upper layer.

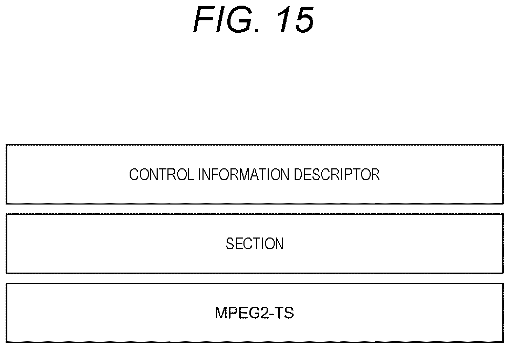

Fig. 15 is a diagram illustrating an example of arrangement of descriptors in the MPEG-2 system. As illustrated in Fig. 15, in the MPEG-2 system, a control information descriptor can be stored in a TS packet in a section format and transmitted.

As described above, when the retransmission is performed by a broadcasting system adopting the MPEG-2 system, a new descriptor transmitted in a section format as a descriptor of the MPEG-2 system is defined, and the upper layer control information can be arranged. As a result, in the retransmission device 20, the upper layer control information obtained by converting the physical layer control information can be transmitted by including in the control information regarding the MPEG-2 system.

Note that PSI/SI transmitted by the MPEG-2 system is defined in, for example, Document B below.

### Document B: ARIB STD-B10 Version 5.13 Association of Radio Industries and Businesses

### (Fifth Scheme)

In the first scheme to the third scheme described above, when the operation of retransmitting the broadcast program broadcasted by the next-generation system digital terrestrial television broadcasting by digital cable television broadcasting is performed, the configuration in which the TLV packet is used as the transmission packet or the MMT scheme is used as the media transport scheme is described.

On the other hand, in the fifth scheme, when the operation of retransmission is performed, a configuration in which a ROUTE scheme is used as the media transport scheme will be described in a case where the operation corresponding to a broadcasting system that is Advanced Television Systems Committee (ATSC) 3.0 is performed. The real-time object delivery over unidirectional transport (ROUTE) scheme is a scheme using a protocol obtained by extending file delivery over unidirectional transport (FLUTE), which is a protocol suitable for multicast-transferring a binary file in one direction.

In the fifth scheme, when the operation of retransmission adopting ATSC 3.0 is performed, the physical layer control information from the transmission device 10 is converted into the upper layer control information by the retransmission device 20 by using a SLT and ROUTE-specific signaling, and is transmitted to the reception device 30.

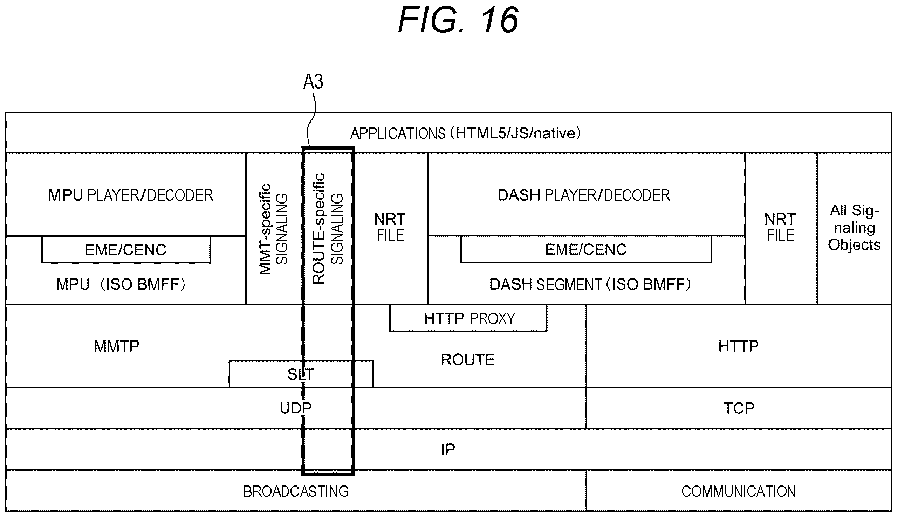

Fig. 16 is a diagram illustrating an example of a protocol stack in ATSC 3.0. In the protocol stack in Fig. 16, broadcasting and communication correspond to the physical layer, and correspond to both transmission paths of broadcasting and communication. Furthermore, in the protocol stack in Fig. 16, in a case where the physical layer is broadcasting, the media transport scheme corresponds to both the ROUTE scheme and the MMT scheme.

In the ROUTE scheme, data such as video, audio, and subtitles is processed as a DASH segment defined by dynamic adaptive streaming over HTTP (MPEG-DASH) and stored in an IP/UDP packet, which is an IP packet including a UDP packet. Then, the IP/UDP packet is stored in the transmission packet and encapsulated, and the resulting broadcast stream is transmitted as a broadcast signal.

In a case where the ROUTE scheme is used, the service list table (SLT), the ROUTE-specific signaling, or the like is used as the control information. The SLT is control information including information indicating the configuration of a stream or a service in a broadcast network, such as information necessary for selecting a service. The ROUTE-specific signaling is control information used in the ROUTE scheme. In the protocol stack in Fig. 16, as indicated by the area surrounded by a frame A3, control information such as the SLT and the ROUTE-specific signaling is transmitted in the transport layer, which is an upper layer.

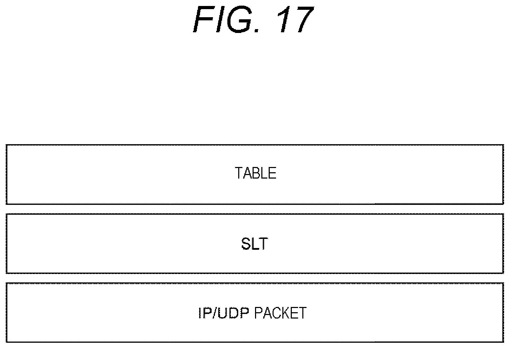

Fig. 17 is a diagram illustrating an example of arrangement of a table in ATSC 3.0. As illustrated in Fig. 17, since the ROUTE-specific signaling is a table in an extensible markup language (XML) format and is associated with the SLT in the XML format, the upper layer control information obtained by converting the physical layer control information is transmitted using the control information regarding the ROUTE scheme such as the SLT and the ROUTE-specific signaling.

As described above, when the retransmission is performed by the broadcasting system, which is the ATSC 3.0 adopting the ROUTE scheme as the media transport scheme, the upper layer control information can be arranged using the control information regarding the ROUTE system. As a result, the retransmission device 20 can transmit the upper layer control information converted from the physical layer control information, the upper layer control information being included in the control information regarding the ROUTE scheme.

Note that the SLT and the ROUTE-specific signaling defined in ATSC 3.0 are defined in, for example, Document C below.

Document C: ATSC Standard: Signaling, Delivery, Synchronization, and Error Protection (A/331), Doc. A/331: 2019 20 June 2019

### (Flow of series of Processing)

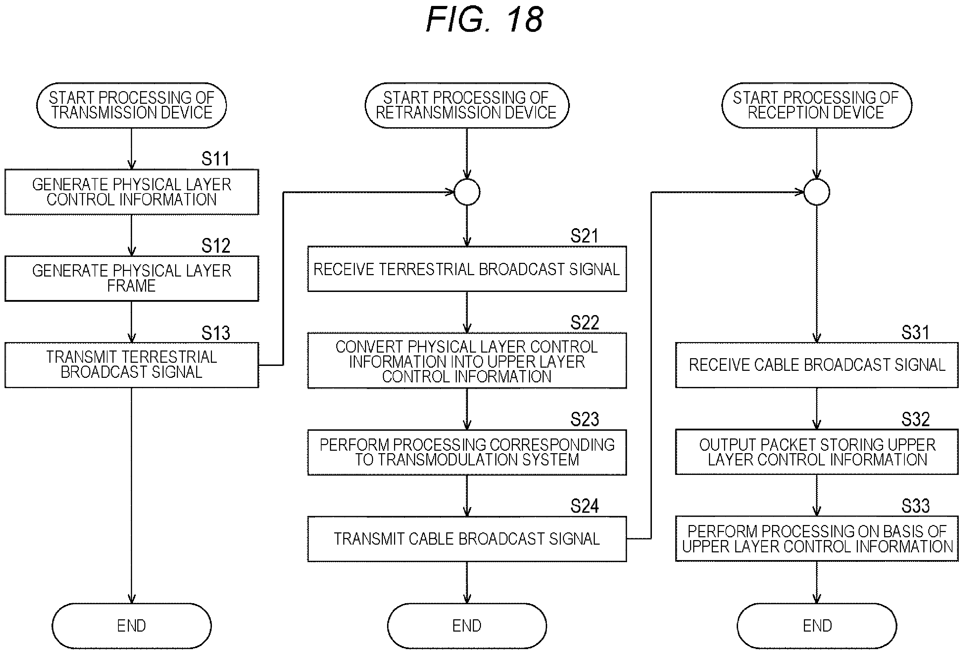

Next, a flow of processing of each device in the transmission system in Fig. 1 will be described with reference to a flowchart in Fig. 18. Here, an operation of retransmitting a broadcast program broadcasted by digital terrestrial television broadcasting by digital cable television broadcasting will be described as an example.

First, processing of steps S11 to S13 performed by the transmission device 10 will be described. In step S11, the generation unit 101 generates physical layer control information.

In step S12, the transmission unit 102 generates a physical layer frame conforming to a broadcasting system of digital terrestrial television broadcasting. This physical layer frame includes physical layer control information. In step S13, the transmission unit 102 transmits the physical layer frame as a terrestrial broadcast signal from the transmission antenna installed in the transmission station.

Next, processing of steps S21 to S24 performed by the retransmission device 20 will be described. In step S21, the reception unit 201 receives the terrestrial broadcast signal transmitted from the transmission device 10 via the antenna.

In step S22, the conversion unit 211 converts the physical layer control information transmitted in the physical layer defined by the broadcasting system of digital terrestrial television broadcasting into upper layer control information to be transmitted in the upper layer defined by the broadcasting system of digital cable television broadcasting, for example, using any one of the first scheme to the third scheme described above.

Here, when performing the conversion processing of the control information, the conversion unit 211 may convert only the control information that meets a predetermined condition among the physical layer control information into the upper layer control information. For example, by setting the area information obtained from the physical layer control information or the like as a condition, only the control information corresponding to a specific area can be converted into the upper layer control information. As a result, since only necessary control information is retransmitted, the amount of data to be transmitted can be reduced.

In step S23, the processing unit 202 performs processing corresponding to the transmodulation system. In step S24, the transmission unit 203 transmits a cable broadcast signal to the cable television transmission network. This cable broadcast signal includes, as the upper layer control information, physical layer control information transmitted in the physical layer defined in the broadcasting system of digital terrestrial television broadcasting.

Next, processing of steps S31 to S33 performed by the reception device 30 will be described. In step S31, the reception unit 301 receives the cable broadcast signal via the cable television transmission network.

In step S32, the reception unit 301 performs necessary processing such as demodulation processing on the received cable broadcast signal, and outputs a TLV packet storing the resulting upper layer control information.

In step S33, the processing unit 302 performs predetermined processing on the basis of the upper layer control information output from the reception unit 301. This upper layer control information is control information obtained by converting the physical layer control information transmitted in the physical layer defined by the broadcasting system of digital terrestrial television broadcasting. Furthermore, in the processing unit 302, the broadcast stream is processed, and the data of the broadcast component is decoded and reproduced on the basis of the upper layer control information.

As described above, the retransmission device 20 converts the physical layer control information transmitted in the physical layer defined in the broadcasting system of digital terrestrial television broadcasting into upper layer control information to be transmitted in the upper layer defined in the broadcasting system of digital cable television broadcasting, so that the reception device 30 can appropriately process the control information.

### <2. Second Embodiment>

### (Configuration of Transmission System)

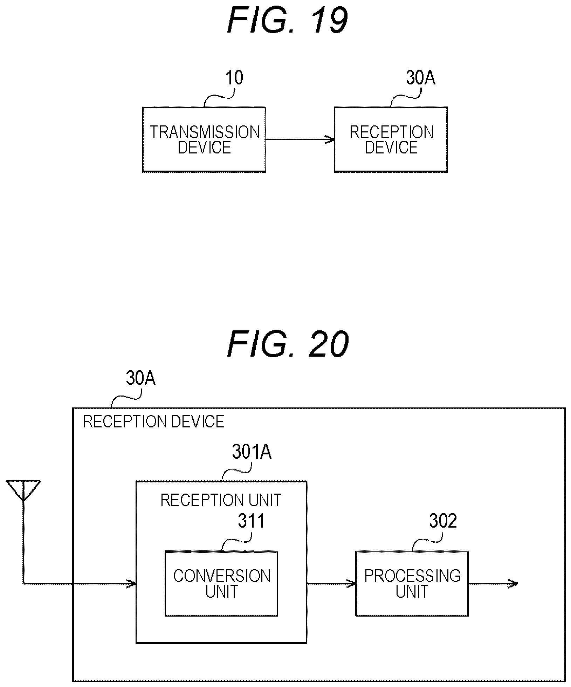

Fig. 19 is a block diagram illustrating another configuration example of the embodiment of the transmission system to which the present disclosure is applied.

In Fig. 19, the transmission system includes a transmission device 10 and a reception device 30A.

The transmission device 10 generates a broadcast stream, performs necessary processing on the stream, and transmits the resulting terrestrial broadcast signal from a transmission antenna installed in a transmission station.

The reception device 30A is a fixed receiver such as a television receiver. The reception device 30A receives the terrestrial broadcast signal transmitted from the transmission device 10 via the antenna. The reception device 30A outputs video and audio of content such as a broadcast program by processing a broadcast stream obtained from the terrestrial broadcast signal. As a result, the user can view content such as a broadcast program.

### (Configuration of Reception Device)

Fig. 20 is a block diagram illustrating a configuration example of the reception device 30A in Fig. 19.

In Fig. 20, the reception device 30A includes a reception unit 301A and a processing unit 302. The reception unit 301A includes a conversion unit 311.

The reception unit 301A includes a tuner, a demodulation LSI, and the like. The reception unit 301A performs necessary processing such as demodulation processing on the terrestrial broadcast signal received from the transmission device 10 via the antenna, and supplies a packet storing data of the resulting broadcast stream to the processing unit 302.

The conversion unit 311 is included in a demodulation device such as the demodulation LSI. The conversion unit 311 converts the physical layer control information transmitted in the physical layer defined by the broadcasting system of digital terrestrial television broadcasting into upper layer control information to be transmitted in the upper layer such as the transport layer. This upper layer control information is stored in a packet and supplied to the processing unit 302.

The processing unit 302 includes a main SoC and the like. The processing unit 302 performs necessary processing such as decoding processing and reproduction processing on the packet supplied from the reception unit 301A.

The broadcast stream includes a broadcast component and upper layer control information. The upper layer control information includes control information regarding the broadcast component and control information obtained by converting physical layer control information transmitted in the physical layer defined by a broadcasting system of digital terrestrial television broadcasting. For example, in the decoding processing and the reproduction processing, the data of the broadcast component is decoded and reproduced on the basis of the upper layer control information.

Data such as video and audio obtained by processing such as the decoding processing and the reproduction processing is output to a subsequent circuit. As a result, in the reception device 30A, the video of content such as a broadcast program is displayed on a display, and the audio synchronized with the video is output from a speaker.

In the transmission system in Fig. 19 configured as described above, in the reception device 30A, the conversion unit 311 of the reception unit 301A converts the physical layer control information transmitted in the physical layer defined in the broadcasting system of digital terrestrial television broadcasting transmitted from the transmission device 10 into upper layer control information to be transmitted in the upper layer such as the transport layer, and outputs the packet including the upper layer control information to the processing unit 302 in the subsequent stage.

With such a configuration, the reception device 30A can multiplex and output the upper layer control information obtained by converting the physical layer control information transmitted in the physical layer defined by the broadcasting system of digital terrestrial television broadcasting with the data without increasing the number of output signals of the demodulation device including the conversion unit 311. As a result, the processing unit 302 including the main SoC can process the upper layer control information output from the reception unit 301A including the demodulation device at an appropriate timing.

### (Flow of series of Processing)

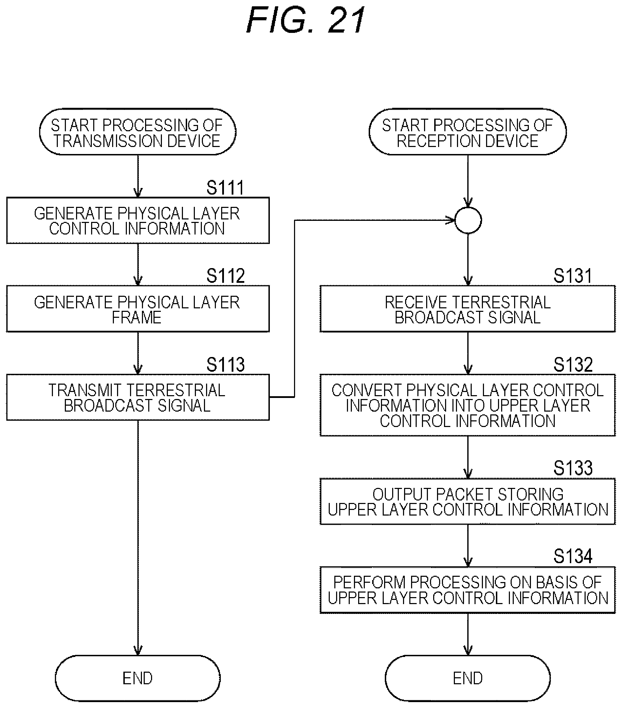

Next, a flow of processing of each device in the transmission system in Fig. 19 will be described with reference to a flowchart of Fig. 21.

First, processing of steps S111 to S113 performed by the transmission device 10 will be described. In steps S111 to S113, as in steps S11 to S13 in Fig. 18, a physical layer frame including physical layer control information is transmitted as a terrestrial broadcast signal from the transmission antenna installed in the transmission station.

Next, processing of steps S131 to S134 performed by the reception device 30A will be described. In step S131, the reception unit 301A receives the terrestrial broadcast signal transmitted from the transmission device 10 via the antenna.

In step S132, the conversion unit 311 converts the physical layer control information transmitted in the physical layer defined by the broadcasting system of digital terrestrial television broadcasting into upper layer control information to be transmitted in the upper layer such as the transport layer, for example, using any one of the first scheme to the third scheme described above. Note that the conversion unit 311 is not limited to one of the first scheme to the third scheme described above, and may use the fourth scheme or the fifth scheme described above.

In step S133, the reception unit 301 outputs a TLV packet storing the upper layer control information. In step S134, the processing unit 302 performs predetermined processing on the basis of the upper layer control information output from the reception unit 301. This upper layer control information is control information obtained by converting the physical layer control information transmitted in the physical layer defined by the broadcasting system of digital terrestrial television broadcasting. Furthermore, in the processing unit 302, the broadcast stream is processed, and the data of the broadcast component is decoded and reproduced on the basis of the upper layer control information.

As described above, in the reception device 30A, the conversion unit 311 converts the physical layer control information transmitted in the physical layer defined in the broadcasting system of digital terrestrial television broadcasting into upper layer control information to be transmitted in the upper layer such as the transport layer, so that the processing unit 302 can appropriately process the control information.

### <3. Modifications>

### (Other Broadcasting Systems)

In the above description, the operation of retransmitting the content such as the broadcast program broadcasted by the next-generation system digital terrestrial television broadcasting by digital cable television broadcasting is mainly described, but the present invention may be applied to a combination of other broadcasting systems. For example, a broadcasting system such as satellite digital broadcasting using a broadcasting satellite (BS), a communications satellite (CS), or the like can be applied. Furthermore, the broadcasting system of digital broadcasting is not limited to ISDB, and a broadcasting system defined by DVB, ATSC, or the like may be used in combination.

### (Other Examples of Reception Device)

In the above description, a device capable of receiving a broadcast signal, such as a television receiver or a set top box, is exemplified as the reception device 30 or the reception device 30A. However, for example, the reception device may have a communication function of performing communication via a communication line (communication network) such as the Internet or a telephone network. In this case, the reception device 30 performs bidirectional communication with a server via a communication line such as the Internet.

Furthermore, in the above description, the reception device 30 or the reception device 30 A is described as a fixed receiver such as a television receiver or a set top box, but the reception device 30 may be a mobile receiver such as a smartphone, a mobile phone, or a tablet computer, an in-vehicle receiver mounted on a vehicle such as an in-vehicle television, or the like. Note that, in the present specification, the system refers to a logical assembly of a plurality of devices.

### (Names of Descriptors and the like)

Another name may be used as the names of the descriptors, fields, packets, streams, and the like described above. For example, a TLV packet may be referred to as an ATSC link-layer protocol (ALP) packet, a generic stream encapsulation (GSE) packet, or the like. The difference between these names is a formal difference, and substantial content of a target descriptor and the like is not different.

### (Configuration of Computer)

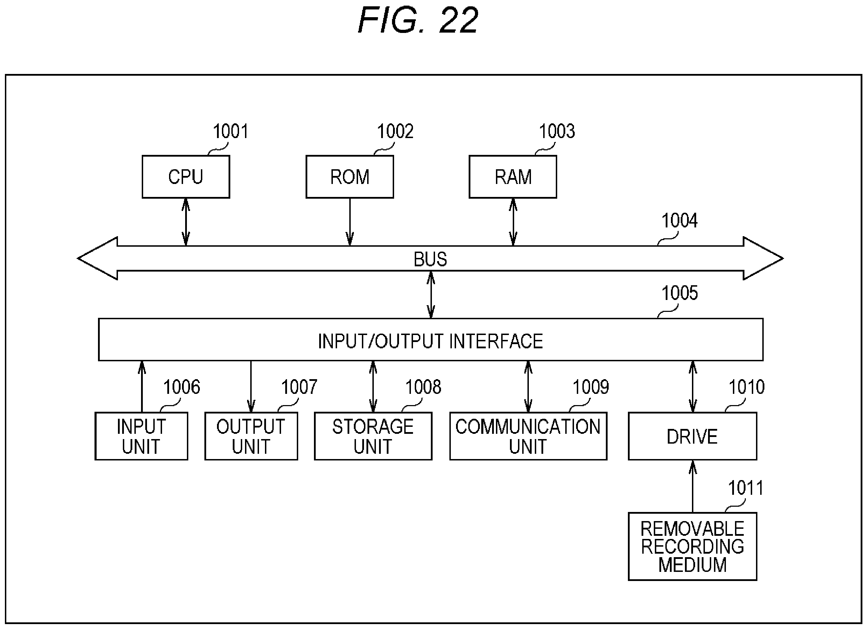

A series of the processing described above can be executed by hardware, or may be executed by software. In a case where the series of processing is executed by software, a program constituting the software is installed on a computer. Fig. 22 is a block diagram illustrating a configuration example of the hardware of the computer that executes the above-described series of processes by the program.

In the computer, a central processing unit (CPU) 1001, a read only memory (ROM) 1002, and a random access memory (RAM) 1003 are mutually connected by a bus 1004. An input/output interface 1005 is further connected to the bus 1004. An input unit 1006, an output unit 1007, a storage unit 1008, a communication unit 1009, and a drive 1010 are connected to the input/output interface 1005.

The input unit 1006 includes a keyboard, a mouse, a microphone and the like. The output unit 1007 includes a display, a speaker, and the like. The storage unit 1008 includes a hard disk, a nonvolatile memory, and the like. The communication unit 1009 includes a network interface and the like. The drive 1010 drives a removable recording medium 1011 such as a semiconductor memory, a magnetic disk, an optical disk, or a magneto-optical disk.

In the computer configured as above, the series of processing described above is executed by the CPU 1001 loading a program recorded in the ROM 1002 or the storage unit 1008 to the RAM 1003 via the input/output interface 1005 and the bus 1004 and executing the program.

A program executed by the computer (CPU 1001) can be provided by being recorded on the removable recording medium 1011 as a package medium, or the like, for example. Furthermore, the program can be provided via a wired or wireless transmission medium such as a local area network, the Internet, or digital broadcasting.

In the computer, the program can be installed on the storage unit 1008 via the input/output interface 1005 by attaching the removable recording medium 1011 to the drive 1010. Furthermore, the program can be received by the communication unit 1009 via a wired or wireless transmission medium and installed in the storage unit 1008. In addition, the program can be installed in the ROM 1002 or the storage unit 1008 in advance.

Here, in the present specification, the processing to be executed by the computer in accordance with the program is not necessarily executed in time series according to orders described in the flowcharts. That is, the processing executed by the computer in accordance with the program also includes processing that is executed in parallel or individually (for example, parallel processing or object processing). Furthermore, the program may be executed by one computer (processor), or may be executed by a plurality of computers in a distributed manner.

Note that embodiments of the present disclosure are not limited to the embodiments described above, and various modifications may be made without departing from the scope of the present disclosure. Furthermore, the effects described in the present specification are merely examples and are not limited, and other effects may be provided.

Furthermore, the present disclosure can have the following configurations.

(1) A retransmission device including:
   a reception unit that receives a broadcast signal of a first broadcasting system;
   a conversion unit that converts first control information transmitted in a physical layer defined by the first broadcasting system into second control information to be transmitted in an upper layer, the upper layer being a layer higher than a physical layer defined by a second broadcasting system different from the first broadcasting system; and
   a transmission unit that transmits a broadcast signal of the second broadcasting system.
(2) The retransmission device according to (1), in which
   the first broadcasting system is a broadcasting system of digital terrestrial television broadcasting, and
   the second broadcasting system is a broadcasting system of digital cable television broadcasting.
(3) The retransmission device according to (1) or (2), in which
   the second broadcasting system
   adopts an IP system, and
   adopts an MMT scheme as a media transport scheme, and
   the second control information is
   included in MMT-SI, and
   transmitted by using a TLV packet including an IP/UDP packet storing the MMT-SI.
(4) The retransmission device according to (1) or (2), in which
   the second broadcasting system adopts an IP system, and
   the second control information is
   stored in a TLV packet including an IP/UDP packet, and
   identified by a packet type of the TLV packet.
(5) The retransmission device according to (1) or (2), in which
   the second broadcasting system adopts an IP system, and
   the second control information is
   included in TLV-SI and
   transmitted by a TLV packet obtained by extending the TLV-SI.
(6) The retransmission device according to (1), in which
   the second broadcasting system
   is a broadcasting system conforming to ATSC 3.0, and
   adopts a ROUTE scheme as a media transport scheme, and
   the second control information is included in control information regarding the ROUTE scheme.
(7) The retransmission device according to (1) or (2), in which
   the second broadcasting system adopts an MPEG-2 system, and
   the second control information is included in control information regarding the MPEG-2 system.
(8) The retransmission device according to any one of (1) to (7), in which
   the conversion unit converts control information that meets a predetermined condition among the first control information into the second control information.
(9) The retransmission device according to any one of (1) to (8), in which
   the upper layer is a transport layer.
(10) A retransmission method, including:
   by a retransmission device,
   receiving a broadcast signal of a first broadcasting system;
   converting first control information transmitted in a physical layer defined by the first broadcasting system into second control information to be transmitted in an upper layer, the upper layer being a layer higher than a physical layer defined by a second broadcasting system different from the first broadcasting system; and
   transmitting a broadcast signal of the second broadcasting system.
(11) A reception device including:
   a reception unit that receives and demodulates a broadcast signal of a first broadcasting system; and
   a processing unit that processes a packet obtained by demodulating the broadcast signal, in which
   the reception unit includes a conversion unit that converts first control information transmitted in a physical layer defined by the first broadcasting system into second control information to be transmitted in an upper layer, the upper layer being a layer higher than a physical layer defined by a second broadcasting system different from the first broadcasting system, and
   the processing unit processes a packet storing the second control information output from the reception unit.
(12) The reception device according to (11), in which
   the first broadcasting system is a broadcasting system of digital terrestrial television broadcasting, and
   the second broadcasting system is a broadcasting system of digital cable television broadcasting.
(13) The reception device according to (11) or (12), in which
   the second broadcasting system
   adopts an IP system, and
   adopts an MMT scheme as a media transport scheme, and
   the second control information is
   included in MMT-SI, and
   transmitted by using a TLV packet including an IP/UDP packet storing the MMT-SI.
(14) The reception device according to (11) or (12), in which
   the second broadcasting system adopts an IP system, and
   the second control information is
   stored in a TLV packet including an IP/UDP packet, and
   identified by a packet type of the TLV packet.
(15) The reception device according to (11) or (12), in which
   the second broadcasting system adopts an IP system, and
   the second control information is
   included in TLV-SI and
   transmitted by a TLV packet storing the TLV-SI.
(16) The reception device according to (11), in which
   the second broadcasting system
   is a broadcasting system conforming to ATSC 3.0, and
   adopts a ROUTE scheme as a media transport scheme, and
   the second control information is included in control information regarding the ROUTE scheme.
(17) The reception device according to (11) or (12), in which
   the second broadcasting system adopts an MPEG-2 system, and
   the second control information is included in control information regarding the MPEG-2 system.
(18) The reception device according to any one of (11) to (17), in which
   the conversion unit is included in a demodulation device.
(19) The reception device according to any one of (11) to (18), in which
   the upper layer is a transport layer.
(20) A reception method of a reception device, the reception device including:
   a reception unit that receives and demodulates a broadcast signal of a first broadcasting system; and
   a processing unit that processes a packet obtained by demodulating the broadcast signal, in which
   the reception unit converts first control information transmitted in a physical layer defined by the first broadcasting system into second control information transmitted in an upper layer, the upper layer being a layer higher than a physical layer defined by a second broadcasting system different from the first broadcasting system, and
   the processing unit processes a packet storing the second control information output from the reception unit.

### REFERENCE SIGNS LIST

- 10: Transmission device
- 20: Retransmission device
- 30: Reception device
- 30A: Reception device
- 101: Generation unit
- 102: Transmission unit
- 201: Reception unit
- 202: Processing unit
- 203: Transmission unit
- 211: Conversion unit
- 301: Reception unit
- 301A: Reception unit
- 302: Processing unit
- 311: Conversion unit
- 1001: CPU

## Claims

1. A retransmission device comprising:
a reception unit that receives a broadcast signal of a first broadcasting system;
a conversion unit that converts first control information transmitted in a physical layer defined by the first broadcasting system into second control information to be transmitted in an upper layer, the upper layer being a layer higher than a physical layer defined by a second broadcasting system different from the first broadcasting system; and
a transmission unit that transmits a broadcast signal of the second broadcasting system.

2. The retransmission device according to claim 1, wherein
the first broadcasting system is a broadcasting system of digital terrestrial television broadcasting, and
the second broadcasting system is a broadcasting system of digital cable television broadcasting.

3. The retransmission device according to claim 2, wherein
the second broadcasting system
adopts an IP system, and
adopts an MMT scheme as a media transport scheme, and
the second control information is
included in MMT-SI, and
transmitted by using a TLV packet including an IP/UDP packet storing the MMT-SI.

4. The retransmission device according to claim 2, wherein
the second broadcasting system adopts an IP system, and
the second control information is
stored in a TLV packet including an IP/UDP packet, and
identified by a packet type of the TLV packet.

5. The retransmission device according to claim 2, wherein
the second broadcasting system adopts an IP system, and
the second control information is
included in TLV-SI and
transmitted by a TLV packet obtained by extending the TLV-SI.

6. The retransmission device according to claim 1, wherein
the second broadcasting system
is a broadcasting system conforming to ATSC 3.0, and
adopts a ROUTE scheme as a media transport scheme, and
the second control information is included in control information regarding the ROUTE scheme.

7. The retransmission device according to claim 1, wherein
the second broadcasting system adopts an MPEG-2 system, and
the second control information is included in control information regarding the MPEG-2 system.

8. The retransmission device according to claim 1, wherein
the conversion unit converts control information that meets a predetermined condition among the first control information into the second control information.

9. The retransmission device according to claim 1, wherein
the upper layer is a transport layer.

10. A retransmission method, comprising:
by a retransmission device
receiving a broadcast signal of a first broadcasting system;
converting first control information transmitted in a physical layer defined by the first broadcasting system into second control information to be transmitted in an upper layer, the upper layer being a layer higher than a physical layer defined by a second broadcasting system different from the first broadcasting system; and
transmitting a broadcast signal of the second broadcasting system.

11. A reception device comprising:
a reception unit that receives and demodulates a broadcast signal of a first broadcasting system; and
a processing unit that processes a packet obtained by demodulating the broadcast signal, wherein
the reception unit includes a conversion unit that converts first control information transmitted in a physical layer defined by the first broadcasting system into second control information to be transmitted in an upper layer, the upper layer being a layer higher than a physical layer defined by a second broadcasting system different from the first broadcasting system, and
the processing unit processes a packet storing the second control information output from the reception unit.

12. The reception device according to claim 11, wherein
the first broadcasting system is a broadcasting system of digital terrestrial television broadcasting, and
the second broadcasting system is a broadcasting system of digital cable television broadcasting.

13. The reception device according to claim 12, wherein
the second broadcasting system
adopts an IP system, and
adopts an MMT scheme as a media transport scheme, and
the second control information is
included in MMT-SI, and
transmitted by using a TLV packet including an IP/UDP packet storing the MMT-SI.

14. The reception device according to claim 12, wherein
the second broadcasting system adopts an IP system, and
the second control information is
stored in a TLV packet including an IP/UDP packet, and
identified by a packet type of the TLV packet.

15. The reception device according to claim 12, wherein
the second broadcasting system adopts an IP system, and
the second control information is
included in TLV-SI and
transmitted by a TLV packet storing the TLV-SI.

16. The reception device according to claim 11, wherein
the second broadcasting system
is a broadcasting system conforming to ATSC 3.0, and
adopts a ROUTE scheme as a media transport scheme, and
the second control information is included in control information regarding the ROUTE scheme.

17. The reception device according to claim 11, wherein
the second broadcasting system adopts an MPEG-2 system, and
the second control information is included in control information regarding the MPEG-2 system.

18. The reception device according to claim 11, wherein
the conversion unit is included in a demodulation device.

19. The reception device according to claim 11, wherein
the upper layer is a transport layer.

20. A reception method of a reception device, the reception device comprising:
a reception unit that receives and demodulates a broadcast signal of a first broadcasting system; and
a processing unit that processes a packet obtained by demodulating the broadcast signal, wherein
the reception unit converts first control information transmitted in a physical layer defined by the first broadcasting system into second control information to be transmitted in an upper layer, the upper layer being a layer higher than a physical layer defined by a second broadcasting system different from the first broadcasting system, and
the processing unit processes a packet storing the second control information output from the reception unit.
